(19) Europäisches Patentamt
European Patent Office
Office européen des brevets

(11) **EP 3 173 376 B1**

(12) **EUROPEAN PATENT SPECIFICATION**

(45) Date of publication and mention
of the grant of the patent:
**29.08.2018 Bulletin 2018/35**

(51) Int Cl.:
***C01B 3/38*** *(2006.01)*     ***C01B 3/48*** *(2006.01)*
***C01B 3/56*** *(2006.01)*     ***C01B 3/16*** *(2006.01)*
***C01B 3/50*** *(2006.01)*

(21) Application number: **15196131.5**

(22) Date of filing: **24.11.2015**

(54) **PROCESS AND APPARATUS FOR PRODUCING HYDROGEN WITH REDUCED CORROSION**

VERFAHREN UND VORRICHTUNG ZUR HERSTELLUNG VON WASSERSTOFF MIT
VERMINDERTER KORROSION

PROCÉDÉ ET APPAREIL DE PRODUCTION D'HYDROGÈNE AVEC UNE CORROSION RÉDUITE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**31.05.2017 Bulletin 2017/22**

(73) Proprietor: **AIR PRODUCTS AND CHEMICALS,
INC.
Allentown, PA 18195-1501 (US)**

(72) Inventors:
• **Sicinski, Michael Andrew
Orefield, PA Pennsylvania 18069 (US)**
• **Graham, David Ross
Harleysville, PA Pennsylvania 19438 (US)**
• **Forester, Kelly Ann
Harleysville, PA Pennsylvania 19438 (US)**
• **Silvestre, Candice Daibes
Quakertown, PA Pennsylvania 18951 (US)**
• **Loughney, Gerald Michael
Collegeville, PA Pennsylvania 19426 (US)**

(74) Representative: **Schwabe - Sandmair - Marx
Patentanwälte Rechtsanwalt
Partnerschaft mbB
Joseph-Wild-Straße 20
81829 München (DE)**

(56) References cited:
**EP-A2- 2 103 569**

• **Peter Häussinger ET AL: "Hydrogen, 3.
Purification" In: "Ullmann's Encyclopedia of
Industrial Chemistry", 15 October 2011
(2011-10-15), Wiley-VCH Verlag GmbH & Co.
KGaA, Weinheim, Germany, XP055070696, ISBN:
978-3-52-730673-2 DOI:
10.1002/14356007.o13_o04, * page 320,
right.hand column, "4. Temperature of the feed
gas." * * page 328, "High-Pure Benfield Process"
* * figure 19 ***

**Description**

BACKGROUND

Hydrogen production facilities are known to have process piping corrosion issues due to $CO_2$ stress-assisted corrosion and $H_2$ embrittlement. It is known in the industry to relieve the residual weld stress by a process called post weld heat treatment.

One particularly vulnerable area of piping is the piping connecting the reformate knock-out drum and the pressure swing adsorption unit.

Industry desires to prevent corrosion of process piping in hydrogen production facilities.

Industry desires hydrogen production processes with high energy efficiency.

BRIEF SUMMARY

The present invention relates to a process and apparatus for producing a hydrogen-containing product gas, as known, for example, from EP 2 103 569 A2. The known process comprises passing a reformate from a shift reactor to a separator via a plurality of heat exchangers thereby condensing water in the reformate to form a water condensate and a water-depleted reformate in the separator, withdrawing the water condensate and the water-depleted reformate from the separator, passing the water-depleted reformate withdrawn from the separator to a $CO_2$ extractor to extract $CO_2$ by scrubbing, and passing at least a portion of the water-depleted reformate from the $CO_2$ extractor to a pressure swing adsorption unit to form a hydrogen-containing product gas and a by-product gas from the at least a portion of the water-depleted reformate.

The present process and apparatus are particularly suited to impede corrosion of piping that connects a condensate separator and a pressure swing adsorption unit.

The process and apparatus according to the present invention are as disclosed in claims 1 and 10, respectively. Further embodiments are described in the dependent claims.

In the process or in the apparatus according to the present invention, the thermal insulation of the at least a portion of the piping operatively connecting the separator and the pressure swing adsorption unit can be configured such that the water-depleted reformate reaches the pressure swing adsorption unit at a temperature above the dewpoint temperature of the water-depleted reformate.

BRIEF DESCRIPTION OF SEVERAL VIEWS OF THE DRAWINGS

FIG. 1 is a block flow diagram for a hydrogen production facility exemplifying the present apparatus and suitable for carrying out the present process.

FIG. 2 is a block flow diagram for a hydrogen production facility exemplifying the present apparatus and suitable for carrying out the present process.

DETAILED DESCRIPTION OF THE PREFERRED EMBODIMENTS

The ensuing detailed description provides preferred exemplary embodiments only, and is not intended to limit the scope, applicability, or configuration of the invention. Rather, the ensuing detailed description of the preferred exemplary embodiments will provide those skilled in the art with an enabling description for implementing the preferred exemplary embodiments of the invention, it being understood that various changes may be made in the function and arrangement of elements without departing from scope of the invention as defined by the claims.

The articles "a" and "an" as used herein mean one or more when applied to any feature in embodiments of the present invention described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used.

The term "and/or" placed between a first entity and a second entity includes any of the meanings of (1) only the first entity, (2) only the second entity, and (3) the first entity and the second entity. The term "and/or" placed between the last two entities of a list of 3 or more entities means at least one of the entities in the list including any specific combination of entities in this list. For example, "A, B and/or C" has the same meaning as "A and/or B and/or C" and comprises the following combinations of A, B and C: (1) only A, (2) only B, (3) only C, (4) A and B and not C, (5) A and C and not B, (6) B and C and not A, and (7) A and B and C.

The phrase "at least one of" preceding a list of features or entities means one or more of the features or entities in the list of entities, but not necessarily including at least one of each and every entity specifically listed within the list of entities and not excluding any combinations of entities in the list of entities. For example, "at least one of A, B, or C" (or equivalently "at least one of A, B, and C" or equivalently "at least one of A, B, and/or C") has the same meaning as "A and/or B and/or C" and comprises the following combinations of A, B and C: (1) only A, (2) only B, (3) only C, (4) A and B and not C, (5) A and C and not B, (6) B and C and not A, and (7) A and B and C.

The term "plurality" means "two or more than two."

The phrase "at least a portion" means "a portion or all." The at least a portion of a stream may have the same composition with the same concentration of each of the species as the stream from which it is derived. The at least a portion of a stream may have a different concentration of species than that of the stream from which it is derived. The at least a portion of a stream may include only specific species of the stream from which it is derived.

As used herein, pressure is absolute pressure (not gauge pressure), unless explicitly stated otherwise.

As used herein a "divided portion" of a stream is a portion having the same chemical composition and species concentrations as the stream from which it was taken.

As used herein a "separated portion" of a stream is a portion having a different chemical composition and different species concentrations than the stream from which it was taken.

As used herein, "first," "second," "third," etc. are used to distinguish from among a plurality of steps and/or features, and is not indicative of the total number, or relative position in time and/or space unless expressly stated as such.

The term "depleted" means having a lesser mole % concentration of the indicated component than the original stream from which it was formed. "Depleted" does not mean that the stream is completely lacking the indicated component.

The terms "rich" or "enriched" means having a greater mole % concentration of the indicated component than the original stream from which it was formed.

As used herein, "heat" and "heating" may include both sensible and latent heat and heating.

As used herein, "indirect heat transfer" is heat transfer from one stream to another stream where the streams are not mixed together. Indirect heat transfer includes, for example, transfer of heat from a first fluid to a second fluid in a heat exchanger where the fluids are separated by plates or tubes. Indirect heat transfer includes transfer of heat from a first fluid to a second fluid where an intermediate working fluid is used to carry the heat from the first fluid to the second fluid. The first fluid may evaporate a working fluid, e.g. water to steam, in an evaporator, the working fluid passed to another heat exchanger or condenser, where the working fluid transfers heat to the second fluid. Indirect heat transfer from the first fluid to a second fluid using a working fluid may be accommodated using a heat pipe, thermosyphon, kettle boiler, or the like.

As used herein, "direct heat transfer" is heat transfer from one stream to another stream where the streams are intimately mixed together. Direct heat transfer includes, for example, humidification where water is sprayed directly into a hot air stream and the heat from the air evaporates the water resulting in a cooler air stream.

Illustrative embodiments of the invention are described below. While the invention is susceptible to various modifications and alternative forms, specific embodiments thereof have been shown by way of example in the drawings and are herein described in detail. It should be understood, however that the description herein of specific embodiments is not intended to limit the invention to the particular forms disclosed, but on the contrary, the invention is to cover all modifications, equivalents, and alternatives falling within the scope of the invention as defined by the appended claims.

For the purposes of simplicity and clarity, detailed descriptions of well-known devices, circuits, and methods are omitted so as not to obscure the description of the present invention with unnecessary detail.

The present invention relates to a process and apparatus for producing a hydrogen-containing product gas. The hydrogen-containing product gas may be industrial grade hydrogen. The hydrogen-containing product gas may be at least 96 volume % hydrogen or at least 99 volume % hydrogen.

The process and apparatus may utilize catalytic steam-hydrocarbon reforming. Catalytic steam-hydrocarbon reforming, also called steam methane reforming (SMR), catalytic steam reforming, or steam reforming, is defined as any process used to convert reformer feedstock into reformate by reaction with steam over a catalyst. Reformate, also called synthesis gas, or simply syngas, as used herein is any mixture comprising hydrogen and carbon monoxide. The reforming reaction is an endothermic reaction and may be described generally as $C_nH_m + nH_2O \rightarrow nCO + (m/2 + n)H_2$. Hydrogen is generated when reformate is generated.

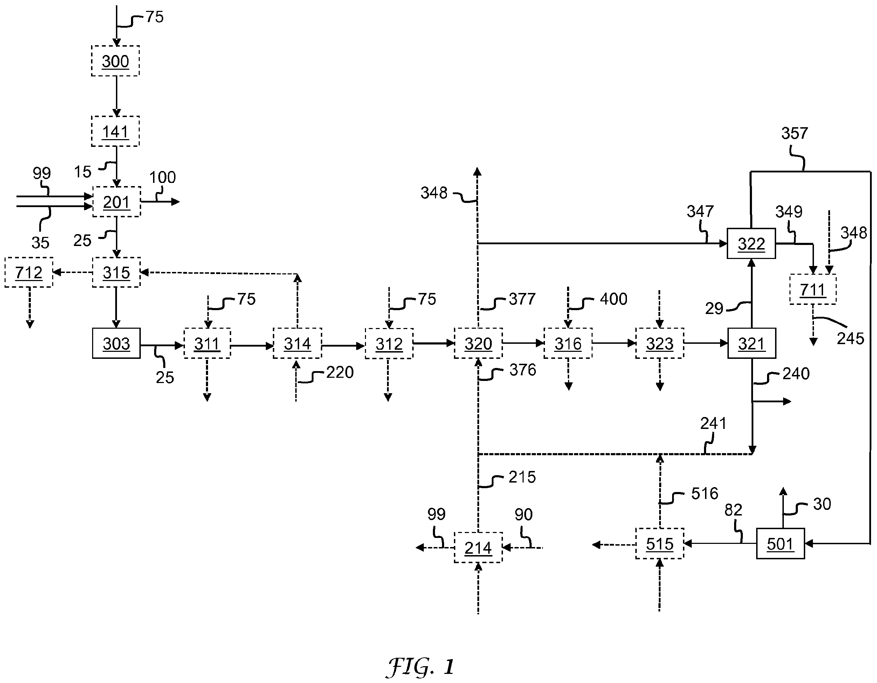

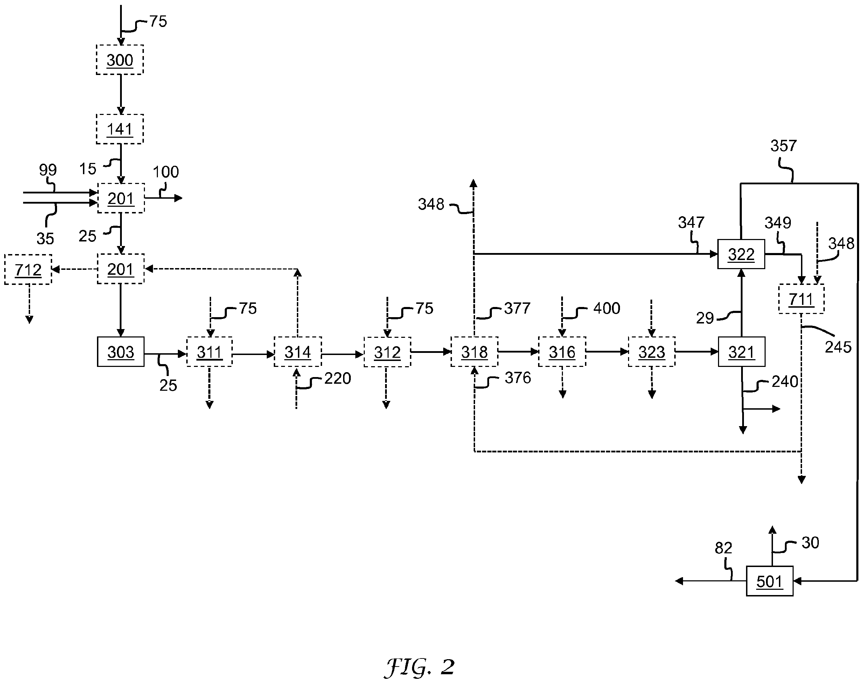

The process is described with reference to FIG. 1 and FIG. 2 showing block flow diagrams for catalytic steam-hydrocarbon reforming processes suitable for carrying out the present process.

The present process is particularly concerned with impeding corrosion of piping 357 that operatively connects the separator 321 and the pressure swing adsorption unit 501 as well as inlet manifolds and piping directly associated with the pressure swing adsorption unit 501.

The process comprises passing a reformate 25 from shift reactor 303 to separator 321 via a plurality of heat exchangers. The reformate is used to heat other process streams and is itself cooled in the plurality of heat exchangers. In FIG. 1, the reformate is shown to pass through heat exchangers 311, 314, 312, 320, 316 and 323. In FIG. 2, the reformate is shown to pass through heat exchangers 311, 314, 312, 318, 316 and 323. In heat exchanger 323, a so-called trim cooler, the reformate may be cooled using cooling water which is circulated to a water cooling tower (not shown). In colder environments, the reformate may be cooled by air in heat exchanger 323. As a result of passing through the heat exchangers, water in the reformate is condensed. The cooled stream is passed to the separator 321 in order to separate water condensate 240 from a water-depleted reformate 29. Separator 321 may be any suitable vapor-liquid separator, for example, a so-called knock-out drum or knock-out pot.

Water condensate 240 is withdrawn from separator 321 and the water-depleted reformate 29 is withdrawn from the separator 321 separately from the water condensate 240.

The process comprises heating the water-depleted reformate 29 that is withdrawn from separator 321. The water-depleted reformate 29 withdrawn from separator 321 may be heated to at least 3 degrees Celsius or at least 5 degrees above the dewpoint temperature of the water-depleted reformate 29. Because the superheat only needs to overcome any condensation risk, only a small amount of heat duty is required. Then the water-depleted reformate 29 withdrawn from the separator 321 may be heated less than 20 degrees Celsius or less than 15 degrees Celsius above the dewpoint temperature of the water-depleted reformate 29.

The dewpoint temperature or dew point is the temperature at which the water vapor in the reformate will start to condense out of the gaseous phase at the pressure of the reformate.

At least a portion of the water-depleted reformate 29 that was heated is passed to pressure swing adsorption unit 501 to form hydrogen-containing product gas 30 and a pressure swing adsorption unit by-product gas 82 from the at least a portion of the water-depleted reformate 29.

By heating the water-depleted reformate 29 above the dewpoint temperature, no liquid water will exist in the piping between the separator 321 and the pressure swing adsorption unit 501. Eliminating liquid water has been found to impede corrosion of this piping.

At least a portion of the piping 357 between the separator 321 and the pressure swing adsorption unit 501 is thermally insulated to maintain the water-depleted reformate 29 above the dewpoint temperature. All of the piping 357 between the separator 321 and the pressure swing adsorption unit 501 may be thermally insulated to maintain the water-depleted reformate 29 above the dewpoint temperature. Thermally insulating the piping 357 between the separator 321 and the pressure swing adsorption unit 501 may be particularly important for operations in cold climates.

To further impede corrosion, post weld heat treating may also be performed.

The hydrogen-containing product gas 30 may be formed from at least a portion of the water-depleted reformate 29 in a pressure swing adsorption unit 501. A pressure swing adsorption unit feed comprising at least a portion of the water-depleted reformate 29 may be separated by adsorption in the pressure swing adsorption unit 501 to form the hydrogen-containing product gas 30 and a pressure swing adsorption unit by-product gas 82, also called PSA tail gas, and PSA purge gas. Pressure swing adsorption units are well-known. Any suitable pressure swing adsorption unit may be used in the present process.

The pressure swing adsorption unit 501 may be operated using any known pressure swing adsorption cycle. Pressure swing adsorption cycles are well-known in the art and the various steps are described for example in U.S. Pat. Appl. Pub. No. 2014/0373713. Specific pressure swing adsorption cycles are provided in companion articles "Pressure Swing Adsorption cycles for 4 to 7 adsorption beds," IP.com number 000241449, April 29, 2015, and "Pressure Swing Adsorption cycles for 7 or more adsorption beds," IP.com number 000241619, May 18, 2015.

Water-depleted reformate 29 may be heated in heat exchanger 322 by indirect heat transfer with a feed 347 to the heat exchanger 322 comprising boiler feed water, steam, or a mixture thereof.

The design of heat exchanger 322 may be a shell and tube heat exchanger where the water-depleted reformate 29 is on the shell side. The heat exchanger 322 may be directly mounted on the separator 321 to minimize the distance of piping exposed to saturated water-depleted reformate 29.

As shown in FIG. 1 and FIG. 2, the process may comprise heating a feed 376 to heat exchanger 320 (FIG. 1) or heat exchanger 318 (FIG. 2) by indirect heat transfer with reformate 25, and withdrawing an effluent 377 from heat exchanger 320 or heat exchanger 318, the effluent 377 formed from feed 376, wherein the feed 347 to heat exchanger 322 comprises a portion of the effluent 377.

Heating feed 376 with reformate 25 after the reformate 25 has heated other streams, as shown in the FIG. 1 and FIG. 2, and using only a portion of the heated effluent 377 for heating the water-depleted reformate 29, provides heat to the water-depleted reformate 29 without sacrificing energy efficiency of the process.

As shown in FIG. 1, feed 376 to heat exchanger 320 may comprise boiler feed water comprising at least a portion of one or more streams including (i) a water effluent 215 from heat exchanger 214 for heating combustion air 99, (ii) a water effluent 516 from heat exchanger 515 for heating by-product gas 82, and (iii) at least a portion 241 of water condensate 240 from separator 321.

The feed 376 to heat exchanger 320 may comprise (i) a water effluent 215 from a heat exchanger 214 for heating combustion air 99, (ii) a water effluent 516 from a heat exchanger 515 for heating the by-product gas 82 from the pressure swing adsorption unit 501, and (iii) at least a portion 241 of the water condensate 240 from the separator 321.

As shown in FIG. 2, feed 376 to heat exchanger 318 may comprise a portion of deaerated water effluent 245 from deaerator 711. Heat exchanger 318 may be a low pressure steam boiler and the effluent 377 from heat exchanger 318 may be low pressure steam having a pressure ranging from 180 kPa (absolute) to 400 kPa (absolute). Then the feed 347 to heat exchanger 322 may be low pressure steam having a pressure ranging from 180 kPa (absolute) to 400 kPa (absolute).

An effluent 349 may be withdrawn from heat exchanger 322 and passed from heat exchanger 322 to deaerator 711 to degas the boiler feed water. A steam stream may be passed to deaerator 711 to assist with degassing water streams introduced into deaerator 711. Steam for the steam stream may come from steam drum 712, low pressure steam boiler (e.g. heat exchanger 318), or other steam source.

The process may further comprise passing a second portion 348 of the effluent from heat exchanger 320 (FIG. 1) or heat exchanger 318 (FIG. 2) to deaerator 711, wherein the second portion 348 bypasses heat exchanger 322.

As used herein a deaerator is any device that removes dissolved gases from water with the assistance of steam. The steam may be introduced into the deaerator or formed in-situ. The manufacture and operation of deaerators are well-known.

The dissolved gases, which may include methanol, are removed from deaerator 711 via a vent stream. To reduce VOC emissions from the hydrogen production facility, the deaerator vent stream from deaerator 711 may be injected into the reformer furnace 201 as described in the "Report on Emission Limits for Rule 1189 - Emissions from Hydrogen Plant Process Vents," South Coast Air Quality Management District, June 7, 2001 (http//www3.aqmd.gov/hb/attachments/2002/ 020620b.doc), and "Final Environmental Assessment: Proposed Rule 1189 - Emissions from Hydrogen Plant Process Vents" SCAQMD No. 1189JDN021199, South Coast Air Quality Management District December 17, 1999 (http://www.aqmd.gov/docs/default-source/ceqa/documents/aqmd-projects/2000/final-ea-for-proposed-amended-rule-1189.doc?sfvrsn=4).

Deaerated boiler feed water 245 from deaerator 711 may be divided into various divided portions, and the various portions heated by reformate and/or combustion product gases to make steam and/or heat other process streams.

Heated boiler feed water can be used to heat combustion air 99 in heat exchanger 214 and/or heat pressure swing adsorption by-product gas 82 in heat exchanger 515. The portion that heats combustion air 99 in heat exchanger 214 is withdrawn as the water effluent 215 and the portion that heats the by-product gas 82 in heat exchanger 515 is withdrawn as water effluent 516.

The pressure swing adsorption unit by-product gas 82 may be heated prior to the pressure swing adsorption unit by-product gas 82 being combusted as fuel in the combustion section of the reformer furnace 201. Heating pressure swing adsorption unit by-product gas is known from U.S. 8,187,363, and also from earlier publications WO2007/020514A2, U.S. 7,377,951, and U.S. 7,850,944.

Boiler feed water stream from steam drum 712 may be passed to a waste heat boiler (not shown), where the boiler feed water stream is heated by indirect heat transfer with reformate 25 and form a two-phase mixture of steam and water which is returned to the steam drum 712 to make steam. High pressure steam may be withdrawn from steam drum 712 and passed to a heat exchanger in the convection section of the reformer furnace 201 to be superheated. A portion of the superheated steam may be removed from the system as export steam and another portion may be used to form the mixed feed to the reformer.

The process may further comprise heating imported water (i.e. makeup water) 400 in heat exchanger 316 by indirect heat transfer with the reformate 25. Reformate 25 may be passed to heat exchanger 320 to heat boiler feed water 347 before the reformate is passed to heat exchanger 316 to heat the imported water 400. After being heated in heat exchanger 316, the imported water 400 may be passed to deaerator 711 to be degassed using added steam as described above.

The process may further comprise heating a hydrocarbon feedstock 75 in heat exchangers 312 and 311 by indirect heat transfer with the reformate 25. The hydrocarbon feedstock 75 may first be heated in heat exchanger 312 and then heated in heat exchanger 311. The reformate 25 may be passed from shift reactor 303 to heat exchanger 311 to heat the hydrocarbon feedstock in heat exchanger 311 before the reformate is passed to heat exchanger 314 to heat the steam drum feed 220 and then passed to heat exchanger 312 to heat the hydrocarbon feedstock 75.

As shown in FIG. 1 and FIG. 2, reformate 25 may then be subsequently passed to heat exchanger 320 or 318, passed to heat exchanger 316 to heat the imported water 400, passed to heat exchanger (trim cooler) 323 to condense water from the reformate, and passed to separator 321.

To form the reformate 25, the process may utilize catalytic steam-hydrocarbon reforming.

In a process using catalytic steam-hydrocarbon reforming, a reformer feed gas mixture 15 is introduced into a plurality of catalyst-containing reformer tubes in reformer furnace 201. The reformer feed gas mixture 15 is reacted in a reforming reaction under reaction conditions effective to form a reformate 25 comprising $H_2$, CO, $CH_4$, and $H_2O$, and the reformate 25 is withdrawn from the plurality of catalyst-containing reformer tubes.

The reformer feed gas mixture 15 may be any feed gas mixture suitable for introducing into a catalytic steam-hydrocarbon reformer for forming a reformate. The reformer feed gas mixture 15 comprises at least one hydrocarbon and steam. The at least one hydrocarbon may be methane. The reformer feed gas mixture 15 is formed from a hydrocarbon feedstock 75 and steam. The reformer feed may be hydrogenated in a hydrogenation unit and/or desulphurized in a hydrodesulphurization unit with hydrogen added. Hydrogenation and hydrodesulphurization may be done in a combination unit 300 or separate units. Hydrogen may be provided from the hydrogen-containing product gas 30.

The reformer feed gas mixture 15 may be prereformed; formed by reacting the hydrocarbon feedstock 75 and steam in a prereformer 141. The hydrocarbon feedstock 75 may be formed from a hydrocarbon feed, which may be natural gas, methane, naphtha, propane, refinery fuel gas, refinery off-gas, other suitable hydrocarbon feed known in the art, or combinations thereof.

The reforming reaction takes place inside the plurality of catalyst-containing reformer tubes in reformer furnace 201. A reformer furnace, also called a catalytic steam reformer, steam methane reformer, and steam-hydrocarbon reformer, is defined herein as any fired furnace used to convert feedstock containing elemental hydrogen and carbon into reformate by a reaction with steam over a catalyst with heat provided by combustion of a fuel.

Reformer furnaces with a plurality of catalyst-containing reformer tubes, i.e. tubular reformers, are well-known in the art. Any suitable number of catalyst-containing reformer tubes may be used. Suitable materials and methods of construction are known. Catalyst in the catalyst-containing reformer tubes may be any suitable catalyst known in the art, for example, a supported catalyst comprising nickel.

The reaction conditions effective to form the reformate 25 in the plurality of catalyst-containing reformer tubes may comprise a temperature ranging from 500°C to 1000°C and a pressure ranging from 203 kPa to 5,066 kPa (absolute). The reaction condition temperature may be as measured by any suitable temperature sensor, for example a type R thermocouple. The reaction condition pressure may be as measured by any suitable pressure sensor known in the art, for example a pressure gauge as available from Mensor.

The process comprises combusting a fuel 35 with an oxidant gas 99 in a combustion section of the reformer furnace 201 external to the plurality of catalyst-containing reformer tubes. The fuel is combusted under conditions effective to combust the fuel to form a combustion product gas 100 comprising $CO_2$ and $H_2O$ and generate heat to supply energy for reacting the reformer feed gas mixture 15 inside the plurality of catalyst-containing reformer tubes. The combustion product gas 100 is then withdrawn from the combustion section of the reformer furnace 201.

Any suitable burner may be used to introduce the fuel 35 and the oxidant gas 99 into the combustion section 203. Combustion of the fuel 35 with the oxidant gas 99 generates heat to supply energy for reacting the reformer feed gas mixture 15 inside the plurality of catalyst-containing reformer tubes. The combustion product gas 100 is withdrawn from the combustion section of the reformer furnace 201 and passed to the convection section of the reformer furnace 201 to supply heat to other process streams. The combustion section (also called the radiant, radiation, or radiative section) of the reformer furnace is that part of the reformer furnace containing the plurality of catalyst-containing reformer tubes. The convection section of the reformer furnace is that part of the reformer furnace containing heat exchangers other than the plurality of catalyst-containing reformer tubes. The heat exchangers in the convection section may be for heating process fluids other than reformate from the plurality of catalyst-containing reformer tubes, such as water/steam, air, pressure swing adsorption unit by-product gas, reformer feed gas mixture prior to introduction into the catalyst-containing reformer tubes, prereformed reformer feed gas, etc. The convection section may also, if desired, contain a convective prereformer.

Furnace conditions effective to combust the fuel may comprise a furnace temperature ranging from 600°C to 1500°C and a pressure ranging from 98 kPa to 101.4 kPa (absolute). Actual flame temperatures are generally higher. The temperature may be as measured by a thermocouple, an optical pyrometer, or any other calibrated temperature measurement device known in the art for measuring furnace temperatures. The pressure may be as measured by any suitable pressure sensor known in the art, for example a pressure gauge as available from Mensor.

The fuel 35 may be formed from a by-product gas 82 from a pressure swing adsorption unit 501 and a supplemental fuel. By-product gas from a pressure swing adsorption unit is often called pressure swing adsorber tail gas, and supplemental fuel is often called trim fuel. The by-product gas 82 and supplemental fuel may be heated before being used as fuel. By-product gas 82 and supplemental fuel may be blended and introduced together through a burner to the combustion section, or they may be introduced separately through different ports in the burner. Alternatively, the by-product gas 82 may be introduced through the primary burner and the supplemental fuel may be introduced through lances near the burner.

The oxidant gas 99 is a gas containing oxygen and may be air, oxygen-enriched air, oxygen-depleted air such as gas turbine exhaust, industrial grade oxygen, or any other oxygen-containing gas known for use in a reformer furnace for combustion. For example, as shown in FIG. 1 and FIG. 2, air 90 may be compressed in forced draft fan (not shown), heated in heat exchanger 214, and passed to the reformer furnace 201 as oxidant gas 99. Heated air from heat exchanger 214 may be further heated in the convection section of the reformer furnace 201 if desired.

Combustion product gas 100 may heat a number of different process streams in the convection section of the reformer furnace 201. The combustion product gas 100 may heat the streams in various different configurations (order of heating).

The combustion product gas 100 may heat the feed to a prereformer 141, the reformer feed gas mixture 15, steam to form superheated steam, and boiler feed water.

The reformate 25 may be passed from the plurality of catalyst-containing reformer tubes to shift reactor 303. The reformate 25 may exchange heat with a number of streams before being passed to the shift reactor 303. For example, the reformate 25 withdrawn from the plurality of catalyst-containing reformer tubes may be passed to a so-called waste heat boiler where the reformate 25 heats boiler feed thereby forming a two-phase water and steam stream that is introduced into a steam drum.

In the shift reactor 303, the reformate 25 is reacted in the presence of a shift catalyst under reaction conditions sufficient to shift the reformate 25 to form additional $H_2$ in the reformate 25. Additional hydrogen gas may be obtained by the catalytic reaction of carbon monoxide and steam. This reaction is exothermic and is commonly referred to as the water-gas shift reaction or shift reaction: $CO+H_2O \rightarrow CO_2+H_2$. The reaction is affected by passing carbon monoxide and water through a bed of a suitable catalyst. The reaction conditions effective to form additional hydrogen in the reformate 25 may comprise a second temperature ranging from 190°C to 500°C and a second pressure ranging from 203 kPa to 5,066 kPa (absolute).

Any suitable shift catalyst may be used. The shift reactor may be a so-called high temperature shift (HTS), low temperature shift (LTS), medium temperature shift (MTS), or combination. One or more shift reactors may be used.

For high temperature shift, an inlet temperature in the range 310°C to 370°C, and an outlet temperature in the range 400°C to 500°C are typical. Usually an iron oxide/chromia catalyst is used for high temperature shift. High temperature shift may be preferred for the present process.

For low temperature shift, an inlet temperature in the range 190°C to 230°C, and an outlet temperature in the range 220°C to 250°C are typical. Usually a catalyst comprising metallic copper, zinc oxide, and one or more other difficulty reducible oxides such as alumina or chromia is used for low temperature shift

For medium temperature shift, an inlet temperature in the range 190°C to 230°C and an outlet temperature of up to 350°C are typical. A suitably formulated supported copper catalyst can be used for medium temperature shift.

A combination may include a sequence of high temperature shift, cooling by indirect heat exchange, and low temperature shift. If desired, either shift stage can be subdivided with interbed cooling.

The apparatus is briefly described with reference to FIG. 1 and FIG. 2 showing block flow diagrams for catalytic steam-hydrocarbon reforming apparatus. The construct of the apparatus should be clear from FIG. 1 and FIG. 2 along with the description of the process.

The apparatus comprises a shift reactor 303, a separator 321, a plurality of heat exchangers operatively connecting the shift reactor 303 to the separator 321, a pressure swing adsorption unit 501 operatively disposed to receive a water-depleted reformate from the separator 321, and a heat exchanger 322 operatively disposed between the separator 321 and the pressure swing adsorption unit 501 for heating the water-depleted reformate from the separator 321.

The apparatus may comprise heat exchanger 320 (FIG. 1) or heat exchanger 318 (FIG. 2) which is operatively disposed to heat the feed 376 by indirect heat transfer with reformate 25 and discharge an effluent 377, of which a portion is feed 347 to heat exchanger 322. Heat exchanger 318 may be a low pressure boiler.

The plurality of heat exchangers may include heat exchanger 316 for heating imported water (makeup water) 400 by indirect heat transfer with reformate 25, heat exchanger 311 and heat exchanger 312 for heating hydrocarbon feedstock 75 by indirect heat transfer with reformate 25, and heat exchanger 314 for heating a steam drum feed 220 by indirect heat transfer with reformate 25.

The apparatus may also comprise heat exchanger 214 for heating combustion air 99 by indirect heat transfer with boiler feed water and heat exchanger 515 for heating by-product gas 82 from the pressure swing adsorption unit 501 by indirect heat transfer with boiler feed water. Heat exchanger 320 (FIG. 1) may be operatively disposed to receive boiler feed water effluent from heat exchanger 214 and/or boiler feed water effluent from heat exchanger 515 and/or a portion 241 of the water condensate 240 from separator 321.

Example 1

Aspen Plus® by Aspen Technology, Inc. was used to simulate the present process and comparative processes. Typical conditions for commercial catalytic steam-hydrocarbon reforming are used, such as natural gas feedstock, and steam-to-carbon ratio. The process is simulated for a case with prereformer 141 and medium temperature shift reactor 303.

A process according to the invention and a comparative process were simulated using the same input parameters. The process according to the invention for example 1 that was simulated is shown in FIG. 1 and includes a waste heat boiler (not shown) between the reformer and heat exchanger 315, and all of heat exchangers 315, 311, 314, 312, 320, 316, 323, 214 and 515. The comparative process that was simulated is the same as the inventive process but without heat exchanger 322. In the inventive process a small portion of the effluent 377 is passed to heat exchanger 322 to heat the water depleted reformate. A larger portion 348 of effluent 377 is passed to the deaerator 711. For the comparative case all of the effluent 377 is passed to deaerator 711 as stream 348.

The thermal energy consumption for hydrogen production for various processes can be compared using the net specific energy (NSE) having units J/Nm$^3$, which can be defined

$$NSE = \frac{HHV_{fuel} * F_{fuel} + HHV_{feed} * F_{feed} - \Delta H * F_{steam}}{HPR} \text{, where}$$

$HHV_{fuel}$ is the higher heating value of the supplemental fuel introduced into the combustion section (J/Nm$^3$),

$F_{fuel}$ is the flow rate of the fuel (Nm$^3$/h),

$HHV_{feed}$ is the higher heating value of the reformer feedstock introduced into the reformer (J/Nm$^3$),

$F_{feed}$ is the flow rate of the reformer feedstock (Nm$^3$/h),

$\Delta H$ is the enthalpy difference between the export steam and water at 25°C (J/kg),

$F_{steam}$ is the mass flow of the export steam (kg/h), and

$HPR$ is the hydrogen production rate (Nm$^3$/h).

The net specific energy for the present process shown in FIG. 1 is 0.06% less than the comparative process, but the comparative process is more susceptible to corrosion in the piping between the knock-out drum and the pressure swing adsorption unit.

Example 2

A process according to the invention and a comparative process were simulated using the same input parameters in example 2. The process according to the invention for example 2 that was simulated is shown in FIG. 2 and includes a waste heat boiler (not shown) between the reformer and heat exchanger 315, and all of heat exchangers 315, 311, 314, 312, 318, 316, and 323. The comparative process that was simulated is the same as the inventive process but without heat exchanger 322. In the inventive process a portion of the effluent 377 is passed to heat exchanger 322 to heat the water depleted reformate. Another portion 348 of effluent 377 is passed to the deaerator 711. For the comparative case all of the effluent 377 is passed to deaerator 711 as stream 348.

The net specific energy for the present process shown in FIG. 2 is 0.3% less than the comparative process, but the comparative process is more susceptible to corrosion in the piping between the knock-out drum and the pressure swing adsorption unit.

**Claims**

1. A process for producing a hydrogen-containing product gas (30) while impeding corrosion of piping (357) operatively connecting a separator (321) and a pressure swing adsorption unit (501), the process comprising:

   passing a reformate (25) from a shift reactor (303) to the separator (321) via a plurality of heat exchangers, the plurality of heat exchangers operatively disposed between the shift reactor (303) and the separator (321), thereby condensing water in the reformate (25) to form a water condensate (240) and a water-depleted reformate (29) in the separator (321);
   withdrawing the water condensate (240) from the separator (321);
   withdrawing the water-depleted reformate (29) from the separator (321);
   heating the water-depleted reformate (29) withdrawn from the separator (321);
   passing at least a portion of the water-depleted reformate (29) that was heated to the pressure swing adsorption unit (501) to form the hydrogen-containing product gas (30) and a by-product gas (82) from the at least a portion of the water-depleted reformate (29); and
   thermally insulating at least a portion of the piping (357) operatively connecting the separator (321) and the pressure swing adsorption unit (501).

2. The process of claim 1 wherein the water-depleted reformate (29) withdrawn from the separator (321) is heated to at least 3 degrees Celsius or at least 5 degrees Celsius above the dewpoint temperature of the water-depleted reformate (29) and/or wherein the water-depleted reformate (29) withdrawn from the separator (321) is heated to less than 20 degrees Celsius or less than 15 degrees Celsius above the dewpoint temperature of the water-depleted reformate (29).

3. The process of any one of the preceding claims wherein the water-depleted reformate (29) is heated in a first heat exchanger (322) by indirect heat transfer with a feed (347) to the first heat exchanger (322) comprising boiler feed water, steam, or a mixture thereof, wherein when the feed (347) to the first heat exchanger (322) is steam, the steam preferably has an absolute pressure ranging from 180 kPa to 400 kPa.

4. The process of claim 3 further comprising
withdrawing an effluent (349) from the first heat exchanger (322), the effluent (349) formed from the feed (347) to the first heat exchanger,
passing the effluent (349) from the first heat exchanger (322) to a deaerator (711);
heating a feed (376) to a second heat exchanger (318, 320) by indirect heat transfer with the reformate (25), wherein the plurality of heat exchangers comprise the second heat exchanger (318, 320); and
withdrawing an effluent (377) from the second heat exchanger (318, 320), the effluent (377) from the second heat exchanger (318, 320) formed from the feed (376) to the second heat exchanger (318, 320), wherein the feed (347) to the first heat exchanger (322) comprises at least a portion of the effluent (377) from the second heat exchanger (318, 320);
the process optionally further comprising passing a second portion (348) of the effluent from the second heat exchanger (318, 320) to the deaerator (711) wherein the second portion (348) bypasses the first heat exchanger (322);

5. The process of claim 4 wherein the second heat exchanger (318) is a low pressure boiler and the effluent (377) from the second heat exchanger (318) is steam having an absolute pressure ranging from 180 kPa to 400 kPa; and wherein the feed (376) to the second heat exchanger (318) comprises a portion of a deaerated water effluent (245) from the deaerator (711).

6. The process of claim 4 wherein the feed (376) to the second heat exchanger (320) comprises one or more of (i) at least a portion of a water effluent (215) from a heat exchanger (214) for heating combustion air (99), (ii) at least a portion of a water effluent (516) from a heat exchanger (515) for heating the by-product gas (82) from the pressure swing adsorption unit (501), and (iii) at least a portion (241) of the water condensate (240) from the separator (321).

7. The process of any one of claims 4 to 6 further comprising:
heating imported water (400) in a third heat exchanger (316) by indirect heat transfer with the reformate (25), wherein the plurality of heat exchangers comprise the third heat exchanger (316), and wherein the reformate heats the feed (376) to the second heat exchanger (320) in the second heat exchanger (320) before the reformate (25) heats the imported water (400) in the third heat exchanger (316); and preferably passing the imported water (400) from the third heat exchanger (316) to the deaerator (711) of claim 4.

8. The process of claim 7 further comprising:
heating a hydrocarbon feedstock (75) in a fourth heat exchanger (311) by indirect heat transfer with the reformate (25), wherein the plurality of heat exchangers comprise the fourth heat exchanger (311), and wherein the reformate (25) heats the hydrocarbon feedstock (75) in the fourth heat exchanger (311) before the reformate (25) heats the feed (376) to the second heat exchanger (320) in the second heat exchanger (320).

9. The process of claim 8 further comprising:

heating a steam drum feed (220) comprising a portion of a deaerated water effluent (245) from the deaerator (711) in a fifth heat exchanger (314) by indirect heat transfer with the reformate (25), wherein the plurality of heat exchangers comprise the fifth heat exchanger (314), and wherein the reformate heats the stream drum feed (220) in the fifth heat exchanger (314) after the reformate heats the hydrocarbon feedstock (75) in the fourth heat exchanger (311) and before the reformate heats the feed (376) to the second heat exchanger (320) in the second heat exchanger (320); and
passing the heated steam drum feed (220) to a steam drum (712);
and optionally further comprising: heating the steam drum feed (220) in a sixth heat exchanger (315) by indirect heat transfer with the reformate (25), wherein the reformate heats the stream drum feed (220) in the sixth heat exchanger (315) before the reformate is passed to the shift reactor (303), and wherein the steam drum feed (220) is heated in the fifth heat exchanger (314) before the steam drum feed (220) is heated in the sixth heat exchanger (315).

10. An apparatus for producing a hydrogen-containing product gas (30) while impeding corrosion of piping (357) operatively connecting a separator (321) and a pressure swing adsorption unit (501), the apparatus comprising:

a shift reactor (303) having an inlet for receiving a reformate (25) and an outlet for discharging the reformate (25) after being reacted in the shift reactor (303);

the separator (321) having an inlet operatively disposed to receive the reformate from the shift reactor, an outlet for discharging a water-depleted reformate (29), and an outlet for discharging a water condensate (240);

a plurality of heat exchangers operatively disposed between the shift reactor (303) and the separator (321);

the pressure swing adsorption unit (501) having an inlet operatively disposed to receive the water-depleted reformate (29) from the separator (321), an outlet for discharging the hydrogen-containing product gas (30), and an outlet for discharging a by-product gas (82); and

a first heat exchanger (322) operatively disposed between the separator (321) and the pressure swing adsorption unit (501) for heating the water-depleted reformate (29) by indirect heat transfer with a feed (347) to the first heat exchanger (322).

11. The apparatus of claim 10 wherein at least a portion of the piping (357) operatively connecting the separator (321) and the pressure swing adsorption unit (501) is thermally insulated.

12. The apparatus of claim 10 or claim 11 further comprising:

a second heat exchanger (318, 320) having a first inlet operatively disposed to receive the reformate (25) from the outlet of the shift reactor (303) and a first outlet to discharge the reformate (25) from the second heat exchanger (318, 320), a second inlet operatively disposed to receive a feed (376) to the second heat exchanger (318, 320) and a second outlet for discharging an effluent (377) from the second heat exchanger (318, 320), wherein the first heat exchanger (322) is operatively disposed to receive a portion of the effluent (377) from the second heat exchanger as the feed (347) to the first heat exchanger (322), and wherein the plurality of heat exchangers comprise the second heat exchanger (318, 320),

the second heat exchanger (318) optionally being a low pressure boiler.

13. The apparatus of claim 12 further comprising:

a third heat exchanger (316) for heating an imported water (400) by indirect heat transfer with the reformate (25), the third heat exchanger (316) having a first inlet operatively disposed to receive the reformate (25) from the first outlet of the second heat exchanger (318, 320) and a first outlet to discharge the reformate (25) from the third heat exchanger (316), a second inlet operatively disposed to receive the imported water (400) and a second outlet to discharge the imported water (400), wherein the plurality of heat exchangers comprise the third heat exchanger;

a fourth heat exchanger (311) for heating a hydrocarbon feedstock (75) by indirect heat transfer with the reformate (25), the fourth heat exchanger (311) having a first inlet operatively disposed to receive the reformate (25) from the outlet of the shift reactor (303) and a first outlet to discharge the reformate (25) from the fourth heat exchanger (311), a second inlet operatively disposed to receive the hydrocarbon feedstock (75) and a second outlet to discharge the hydrocarbon feedstock (75), wherein the plurality of heat exchangers comprise the fourth heat exchanger;

a fifth heat exchanger (314) for heating a steam drum feed (220) by indirect heat transfer with the reformate (25), the fifth heat exchanger (314) having a first inlet operatively disposed to receive the reformate (25) from the first outlet of the fourth heat exchanger (311) and a first outlet to discharge the reformate (25) from the fifth heat exchanger, a second inlet operatively disposed to receive the steam drum feed (220) and a second outlet to discharge the steam drum feed (220), wherein the plurality of heat exchangers comprise the fifth heat exchanger (314); and

a sixth heat exchanger (312) for heating the hydrocarbon feedstock (75) by indirect heat transfer with the reformate (25), the sixth heat exchanger (312) having a first inlet operatively disposed to receive the reformate (25) from the first outlet of the fifth heat exchanger (314) and a first outlet to discharge the reformate (25) from the sixth heat exchanger (312), a second inlet operatively disposed to receive the hydrocarbon feedstock (75) and a second outlet to discharge the hydrocarbon feedstock (75), wherein the second inlet of the fourth heat exchanger (311) is operatively disposed to receive the hydrocarbon feedstock (75) from the second outlet of the sixth heat exchanger (312), and wherein the plurality of heat exchangers comprise the sixth heat exchanger (312).

14. The apparatus of claim 12 or claim 13 further comprising:

a heat exchanger (214) for heating combustion air (99) by indirect heat transfer with boiler feed water to the heat exchanger (214) for heating combustion air (99), the heat exchanger for heating combustion air having a first inlet operatively disposed to receive the boiler feed water and a first outlet to discharge a water effluent (215) from the heat exchanger (214) for heating combustion air (99), a second inlet operatively disposed to receive the combustion air (99) and a second outlet to discharge the combustion air (99), wherein the second inlet of the second heat exchanger (320) is operatively disposed to receive the water effluent (215) from the heat exchanger (214) for heating combustion air (99); and/or

a heat exchanger (515) for heating the by-product gas (82) by indirect heat transfer with boiler feed water to the heat exchanger (515) for heating the by-product gas (82), the heat exchanger for heating the by-product gas (82) having a first inlet operatively disposed to receive the boiler feed water and a first outlet to discharge a water effluent (516) from the heat exchanger (515) for heating the by-product gas (82), a second inlet operatively disposed to receive the by-product gas (82) from the pressure swing adsorption unit (501) and a second outlet to discharge the by-product gas (82), wherein the second inlet of the second heat exchanger (320) is operatively disposed to receive the water effluent (516) from the heat exchanger (515) for heating the by-product gas (82); and/or wherein the second heat exchanger (320) is operatively disposed to receive at least a portion (241) of the water condensate (240) from the separator (321).

**Patentansprüche**

1. Verfahren zum Herstellen eines wasserstoffenthaltenden Produktgases (30) bei drohender Korrosion des Leitungssystems (357), das einen Separator (321) und eine Druckwechseladsorptions-Einheit (501) verbindet, das Verfahren umfassend:

Leiten eines Reformats (25) von einem Shift-Reaktor (303) zu dem Separator (321) über eine Vielzahl von Wärmetauschern, wobei die Vielzahl von Wärmetauschern operativ zwischen dem Shift-Reaktor (303) und dem Separator (321) angeordnet sind, dabei Kondensieren von Wasser in dem Reformat (25), um in dem Separator (321) ein Wasserkondensat (240) und ein wasserabgereichertes Reformat (29) zu bilden;
Entziehen des Wasserkondensats (240) aus dem Separator (321);
Entziehen des wasserabgereicherten Reformats (29) aus dem Separator (321);
Erwärmen des aus dem Separator (321) entzogenen wasserabgereicherten Reformats (29);
Leiten wenigstens eines Teils des wasserabgereicherten Reformats (29), das erwärmt wurde, zu der Druckwechseladsorptions-Einheit (501) um das wasserstoffenthaltende Produktgas (30) und ein Abfallproduktgas (82) aus dem wenigstens einen Teil des wasserabgereicherten Reformats (29) zu bilden; und
thermisches Isolieren wenigstens eines Teils des Leitungssystems (357), das den Separator (321) und die Druckwechseladsorptions-Einheit (501) operativ verbindet.

2. Verfahren nach Anspruch 1, wobei das wasserabgereicherte Reformat (29), das von dem Separator (321) entzogen wurde, auf wenigstens 3° C oder auf wenigstens 5° C über die Taupunkttemperatur des wasserabgereicherten Reformats (29) erwärmt wird und/oder wobei das wasserabgereicherte Reformat (29), das von dem Separator (321) entzogen wurde, auf weniger als 20° C oder weniger als 15° C über die Taupunkttemperatur des wasserabgereicherten Reformats (29) erwärmt wird.

3. Verfahren nach einem der vorhergehenden Ansprüche, wobei das wasserabgereicherte Reformat (29) in einem ersten Wärmetauscher (322) durch indirekten Wärmeübertrag mit einer Beschickung (347) zu dem ersten Wärmetauscher (322), die Kesselspeicherwasser, Dampf oder ein Mischung davon umfasst, erwärmt wird, wobei, wenn die Beschickung (347) zu dem ersten Wärmetauscher (322) Dampf ist, der Dampf einen absoluten Druck von zwischen 180 kPa bis 400 kPa hat.

4. Verfahren nach Anspruch 3, weiterhin umfassend:

Entziehen eines Ausflusses (349) aus dem ersten Wärmetauscher (322), wobei der Ausfluss (349) aus der Beschickung (347) zu dem ersten Wärmetauscher gebildet ist;

Leiten des Ausflusses (349) von dem ersten Wärmetauscher (322) zu einem Entgaser (711);
Erwärmen einer Beschickung (376) zu einem zweiten Wärmetauscher (318, 320) durch indirekten Wärmetausch mit dem Reformat (25), wobei die Vielzahl von Wärmetauschern den zweiten Wärmetauscher (318, 320) umfasst; und
Entziehen eines Ausflusses (377) von dem zweiten Wärmetauscher (318, 320),
wobei der Ausfluss (377) von dem zweiten Wärmetauscher (318, 320) von der Beschickung (376) zu dem zweiten Wärmetauscher (318, 320) gebildet wird, wobei die Beschickung (347) zu dem ersten Wärmetauscher (322) wenigstens einen Teil des Ausflusses (377) von dem zweiten Wärmetauscher (318, 320) umfasst;
und das Verfahren optional ferner umfasst: Leiten eines zweiten Teils (348) des Ausflusses von dem zweiten Wärmetauscher (318, 320) zu dem Entgaser (371),
wobei der zweite Teil (348) den ersten Wärmetauscher (322) umgeht.

5. Verfahren nach Anspruch 4, wobei der zweite Wärmetauscher (318) ein Niederdruckkessel ist, und der Ausfluss (377) von dem zweiten Wärmetauscher (318) Dampf ist, mit einem absoluten Druck zwischen 280 kPa bis 400 kPa; und wobei die Beschickung (376) zu dem zweiten Wärmetauscher (318) einen Teil eines entgasten Wasserauslasses (245) von dem Entgaser (711) ist.

6. Verfahren nach Anspruch 4, wobei die Beschickung (376) zu dem zweiten Wärmetauscher (320) eines oder mehrere von (i) wenigstens eines Teils eines Wasserausflusses (215) von einem Wärmetauscher (214) zum Erwärmen von Verbrennungsluft (99) ist, (ii) wenigstens ein Teil eines Wasserauslasses (516) von einem Wärmetauscher (515) zum Erwärmen des Abfallproduktgases (82) von der Druckwechseladsorptions-Einheit (501) ist; und (iii) wenigstens ein Teil (241) des Wasserkondensats (240) von dem Separator (321) ist.

7. Verfahren nach einem der Ansprüche 4 bis 6, weiterhin umfassend:
Erwärmen von zugeführtem Wasser (400) durch indirekten Wärmeübertrag mit dem Reformat (25) in einem dritten Wärmetauscher (316), wobei die Vielzahl von Wärmetauschern den dritten Wärmetauscher (316) umfasst, und wobei das Reformat die Beschickung (376) zu dem zweiten Wärmetauscher (320) in dem zweiten Wärmetauscher (320) erwärmt, bevor das Reformat (25) das zugeführte Wasser (400) in dem dritten Wärmetauscher (316) erwärmt; und vorzugsweise Leiten des zugeführten Wassers (400) von dem dritten Wärmetauscher (316) zu dem Entgaser (711) von Anspruch 4.

8. Verfahren nach Anspruch 7, weiterhin umfassend:

Erwärmen eines Hydrokarbonat-Ausgangsmaterials (75) durch indirekten Wärmeübergang mit dem Reformat (25) in einem vierten Wärmetauscher (311),
wobei die Vielzahl von Wärmetauschern den vierten Wärmetauscher (311) umfasst,
und wobei das Reformat (25) das Hydrokarbonat-Ausgangsmaterial (75) in dem vierten Wärmetauscher (311) erwärmt, bevor das Reformat (25) die Beschickung (376) zu dem zweiten Wärmetauscher (320) in dem zweiten Wärmetauscher (320) erwärmt.

9. Verfahren nach Anspruch 8, weiterhin umfassend:

Erwärmen einer Dampftrommel-Beschickung (220), die einen Teil eines entgasten Wasserabflusses (245) von dem Entgaser (711) umfasst, durch indirekten Wärmeübergang mit dem Reformat (25) in einem fünften Wärmetauscher (314),
wobei die Vielzahl von Wärmetauschern den fünften Wärmetauscher (314) umfasst,
und wobei das Reformat die Dampftrommel-Beschickung (220) in dem fünften Wärmetauscher (314) erwärmt, nachdem das Reformat das Hydrokarbonat-Ausgangsmaterial (75) in dem vierten Wärmetauscher erwärmt und bevor das Reformat die Beschickung (376) zu dem weiten Wärmetauscher (320) in dem zweiten Wärmetauscher (320) erwärmt; und
Leiten der erwärmten Dampftrommel-Beschickung (220) zu einer Dampftrommel (712);
und optional ferner umfassend:
Erwärmen der Dampftrommel-Beschickung (220) durch indirekten Wärmeübergang mit dem Reformat (25) in einem sechsten Wärmetauscher (315), wobei das Reformat die Dampftrommel-Beschickung (220) in dem sechsten Wärmetauscher (315) erwärmt, bevor das Reformat zu dem Shift-Reaktor (303) geleitet wird, und wobei die Dampftrommel-Beschickung (220) in dem fünften Wärmetauscher (314) erwärmt wird, bevor die Dampftrommel-Beschickung (220) in dem sechsten Wärmetauscher (315) erwärmt wird.

**10.** Vorrichtung zum Herstellen eines wasserstoffenthaltenden Produktgases (30) während Korrosion eines Leitungssystems (357), das einen Separator (321) und eine Druckwechseladsorptions-Einheit (501) operativ verbindet, droht, die Vorrichtung umfassend:

einen Shift-Reaktor (303) mit einem Einlass zum Erhalten eines Reformats (25) und einem Auslass zum Ausgeben des Reformats (25), nachdem es in dem Shift-Reaktor (303) reagiert wurde;
wobei der Separator (231) einen Einlass hat, der operativ angeordnet ist, das Reformat von dem Shift-Reaktor zu erhalten, einen Auslass, um ein wasserabgereichertes Reformat (29) abzugeben, und einen Auslass, um ein Wasserkondensat (240) abzugeben;
eine Vielzahl von Wärmetauschern, die operativ zwischen dem Shift-Reaktor (303) und dem Separator (321) angeordnet sind;
wobei die Druckwechseladsorptions-Einheit (501) einen Einlass hat, der operativ angeordnet ist, um das wasserabgereicherte Reformat (29) von dem Separator (321) zu erhalten, einen Auslass zum Abgeben des wasserstoffenthaltenden Produktgases (30), und einen Auslass zum Abgeben eines Produktabfall-Gases (82); und
einen ersten Wärmetauscher (322), der operativ zwischen dem Separator (321) und der Druckwechseladsorptions-Einheit (501) angeordnet ist, um das wasserabgereicherte Reformat (29) durch indirekten Wärmetausch mit einer Beschickung (347) zu dem ersten Wärmetauscher (322) zu erwärmen.

**11.** Vorrichtung nach Anspruch 10, wobei wenigstens ein Teil des Leitungssystems (357), das den Separator (321) und die Druckwechseladsorptions-Einheit (501) verbindet, thermisch isoliert ist.

**12.** Vorrichtung nach Anspruch 10 oder Anspruch 11, weiterhin umfassend:

einen zweiten Wärmetauscher (318, 320) mit einem ersten Einlass, der operativ angeordnet ist, um das Reformat (25) von dem Auslass des Shift-Reaktors (303) zu erhalten, und einen ersten Auslass, um das Reformat (25) von dem zweiten Wärmetauscher (318, 320) abzugeben, einem zweiten Einlass, der operativ angeordnet ist, um eine Beschickung (376) für den zweiten Wärmetauscher (318, 320) zu erhalten, und einen zweiten Auslass, um einen Ausfluss (377) von dem zweiten Wärmetauscher (318, 320) abzugeben, wobei der erste Wärmetauscher (322) operativ angeordnet ist, um einen Teil des Ausflusses (377) von dem zweiten Wärmetauscher als die Beschickung (347) zu dem ersten Wärmetauscher (322) zu erhalten, und wobei die Vielzahl von Wärmetauschern den zweiten Wärmetauscher (318, 320) umfasst,
wobei der zweite Wärmetauscher (318) optional ein Niederdruckkessel ist.

**13.** Vorrichtung nach Anspruch 12, ferner umfassend:

einen dritten Wärmetauscher (316) um ein zugeführtes Wasser (400) durch indirekten Wärmetausch mit dem Reformat (25) zu erwärmen, wobei der dritte Wärmetauscher (316) einen ersten Einlass hat, der operativ angeordnet ist, das Reformat (25) von dem ersten Ausgang des zweiten Wärmetauschers (318, 320) zu erhalten, und einen ersten Auslass, um das Reformat (25) von dem dritten Wärmespeicher (316) abzugeben, einen zweiten Einlass, der operativ angeordnet ist, um das zugeführte Wasser (400) zu erhalten, und einen zweiten Auslass, um das zugeführte Wasser (400) abzugeben, wobei die Vielzahl von Wärmetauschern den dritten Wärmetauscher umfasst;
einen vierten Wärmetauscher (311) um ein Hydrokarbonat-Ausgangsmaterial (75) durch indirekten Wärmetausch mit dem Reformat (25) zu erwärmen, wobei der vierte Wärmetauscher (311) einen ersten Einlass hat, der operativ angeordnet ist, um das Reformat (25) von dem Auslass des Shift-Reaktors (303) zu erhalten, und einen ersten Auslass, um das Reformat (25) von dem vierten Wärmetauscher (311) abzugeben, einen zweiten Einlass, der operativ angeordnet ist, das Hydrokarbonat-Ausgangsmaterial (75) zu erhalten, und einen zweiten Auslass, um das Hydrokarbonat-Ausgangsmaterial (75) abzugeben, wobei die Vielzahl von Wärmetauschern den vierten Wärmetauscher umfasst;
einen fünften Wärmetauscher (314) zum Erwärmen einer Dampftrommel-Beschickung (220) durch indirekten Wärmetausch mit dem Reformat (25), wobei der fünfte Wärmetauscher (314) einen ersten Einlass hat, der operativ angeordnet ist, um das Reformat (25) von dem ersten Auslass des vierten Wärmetauschers (311) zu erhalten, und einen ersten Auslass, um das Reformat (25) von dem fünften Wärmetauscher abzugeben, einen zweiten Einlass, der operativ angeordnet ist, die Dampftrommel-Beschickung (220) zu erhalten, und einen zweiten Auslass um die Dampftrommel-Beschickung (220) abzugeben, wobei die Vielzahl von Wärmetauschern den fünften Wärmetauscher (314) umfasst; und
einen sechsten Wärmetauscher (312), um das Hydrokarbonat-Ausgangsmaterial (75) durch indirekten Wärmetausch mit dem Reformat (25) zu erwärmen, wobei der sechste Wärmetauscher (312) einen ersten Einlass hat, der operativ angeordnet ist, um das Reformat (25) von dem ersten Auslass des fünften Wärmetauschers (314) zu erhalten, und einem ersten Auslass, um das Reformat (25) von dem sechsten Wärmetauscher (312) abzugeben, einen zweiten Einlass operativ angeordnet, um das Hydrokarbonat-Ausgangsmaterial (75) zu erhalten, und einen zweiten Auslass, um das Hydrokarbonat-Ausgangsmaterial (75) abzugeben, wobei der zweite Einlass des vierten Wärmetauschers (311) operativ angeordnet ist, um das Hydrokarbonat-Ausgangsmaterial (75) von dem zweiten Auslass des sechsten Wärmetauschers (312) zu erhalten, und wobei die Vielzahl von Wärmetauschern den sechsten Wärmetauscher (312) umfasst.

**14.** Vorrichtung nach Anspruch 12 oder Anspruch 13, weiterhin umfassend:

einen Wärmetauscher (214) zum Erwärmen von Verbrennungsluft (99) durch indirekten Wärmetausch mit Kesselspeisewasser zu dem Wärmetauscher (214), um die Verbrennungsluft (99) zu erwärmen, wobei der Wärmetauscher zum Erwärmen der Verbrennungsluft einen ersten Einlass hat, der operativ angeordnet ist das Kesselspeisewasser zu erhalten, und einen ersten Auslass, um einen Wasserausfluss (215) von dem Wärmetauscher (214) zum Erwärmen der Verbrennungsluft (99), einen zweiten Einlass, der operativ angeordnet ist die Verbrennungsluft (99) zu erhalten, und einen zweiten Auslass um die Verbrennungsluft (99) abzugeben, wobei der zweite Einlass des zweiten Wärmetauschers (320) operativ angeordnet ist den Wasserausfluss (215) von dem Wärmetauscher (214) zu erhalten, um die Verbrennungsluft (99) zu erwärmen; und/oder einen Wärmetauscher (515) zum Erwärmen des Produktabfall-Gases (82) durch indirekten Wärmetausch mit Kesselspeisewasser zu dem Wärmetauscher (515) zum Erwärmen des Produktabfall-Gases (82), wobei der Wärmetauscher zum Erwärmen des Produktabfall-Gases (82) einen ersten Einlass hat, der operativ angeordnet ist, das Kesselspeisewasser zu erhalten, und einen ersten Auslass, um einen Wasserausfluss (516) von dem Wärmetauscher (515) abzugeben, um das Produktabfall-Gas (82) zu erwärmen, einen zweiten Einlass, der operativ angeordnet ist, das Produktabfall-Gas (82) von der Druckwechseladsorptions-Einheit (501) zu erhalten, und einen zweiten Auslass, um das Produktabfall-Gas (82) abzugeben, wobei der zweite Einlass des zweiten Wärmetauschers (320) operativ angeordnet ist, den Wasserausfluss (516) von dem Wärmetauscher (515) zu erhalten, um das Produktabfall-Gas (82) zu erwärmen; und/oder wobei der zweite Wärmetauscher (320) operativ angeordnet ist, wenigstens einen Teil (241) des Wasserkondensats (240) von dem Separator (321) zu erhalten.

## Revendications

**1.** Procédé de production d'un produit gazeux contenant de l'hydrogène (30) tout en ralentissant la corrosion de la tuyauterie (357) reliant de manière fonctionnelle un séparateur (321) et une unité d'adsorption modulée en pression (501), le procédé comprenant :

le passage d'un reformat (25) depuis un réacteur de conversion (303) vers le séparateur (321) via une pluralité d'échangeurs de chaleur, la pluralité d'échangeurs de chaleur étant disposée de manière fonctionnelle entre le réacteur de conversion (303) et le séparateur (321), pour ainsi condenser l'eau dans le reformat (25) pour former un condensat aqueux (240) et un reformat appauvri en eau (29) dans le séparateur (321) ; le retrait du condensat aqueux (240) à partir du séparateur (321) ; le retrait du reformat appauvri en eau (29) à partir du séparateur (321) ; le chauffage du reformat appauvri en eau (29) retiré du séparateur (321) ; le passage d'au moins une partie du reformat appauvri en eau (29) qui a été chauffé dans l'unité d'adsorption modulée en pression (501) pour former le produit gazeux contenant de l'hydrogène (30) et un sous-produit gazeux (82) à partir de l'au moins une partie du reformat appauvri en eau (29) ; et l'isolation thermique d'au moins une partie de la tuyauterie (357) reliant de manière fonctionnelle le séparateur (321) et l'unité d'adsorption modulée en pression (501).

**2.** Procédé selon la revendication 1 dans lequel le reformat appauvri en eau (29) retiré du séparateur (321) est chauffé à au moins 3 degrés Celsius ou au moins 5 degrés Celsius au-dessus du point de rosée du reformat appauvri en eau (29) et/ou dans lequel le reformat appauvri en eau (29) retiré du séparateur (321) est chauffé à moins de 20 degrés Celsius ou moins de 15 degrés Celsius au-dessus de la température de rosée du reformat appauvri en eau (29).

**3.** Procédé selon l'une quelconque des revendications précédentes dans lequel le reformat appauvri en eau (29) est chauffé dans un premier échangeur de chaleur (322) par transfert thermique indirect avec une alimentation (347) pour le premier échangeur de chaleur (322) comprenant de l'eau d'alimentation de chaudière, de la vapeur d'eau, ou un mélange de celles-ci, dans lequel quand l'alimentation (347) pour le premier échangeur de chaleur (322) est de la vapeur d'eau, la vapeur d'eau présente de préférence une pression absolue allant de 180 kPa à 400 kPa.

4. Procédé selon la revendication 3 comprenant en outre
le retrait d'un effluent (349) à partir du premier échangeur de chaleur (322), l'effluent (349) étant formé à partir de l'alimentation (347) pour le premier échangeur de chaleur,
le passage de l'effluent (349) depuis le premier échangeur de chaleur (322) vers un dégazeur (711) ;
le chauffage d'une alimentation (376) pour un deuxième échangeur de chaleur (318, 320) par transfert thermique indirect avec le reformat (25), dans lequel la pluralité d'échangeurs de chaleur comprend le deuxième échangeur de chaleur (318, 320) ; et le retrait d'un effluent (377) à partir du deuxième échangeur de chaleur (318, 320), l'effluent (377) provenant du deuxième échangeur de chaleur (318, 320) étant formé à partir de l'alimentation (376) pour le deuxième échangeur de chaleur (318, 320), dans lequel l'alimentation (347) pour le premier échangeur de chaleur (322) comprend au moins une partie de l'effluent (377) provenant du deuxième échangeur de chaleur (318, 320) ;
le procédé comprenant en outre facultativement le passage d'une seconde partie (348) de l'effluent provenant du deuxième échangeur de chaleur (318, 320) vers le dégazeur (711) dans lequel la seconde partie (348) contourne le premier échangeur de chaleur (322).

5. Procédé selon la revendication 4 dans lequel le deuxième échangeur de chaleur (318) est une chaudière basse pression et l'effluent (377) provenant du deuxième échangeur de chaleur (318) est de la vapeur d'eau présentant une pression absolue allant de 180 kPa à 400 kPa ; et
dans lequel l'alimentation (376) pour le deuxième échangeur de chaleur (318) comprend une partie d'un effluent aqueux dégazé (245) provenant du dégazeur (711).

6. Procédé selon la revendication 4 dans lequel l'alimentation (376) pour le deuxième échangeur de chaleur (320) comprend une ou plusieurs parmi (i) au moins une partie d'un effluent aqueux (215) provenant d'un échangeur de chaleur (214) pour chauffer de l'air de combustion (99), (ii) au moins une partie d'un effluent aqueux (516) provenant d'un échangeur de chaleur (515) pour chauffer le sous-produit gazeux (82) provenant de l'unité d'adsorption modulée en pression (501), et (iii) au moins une partie (241) du condensat aqueux (240) provenant du séparateur (321).

7. Procédé selon l'une quelconque des revendications 4 à 6 comprenant en outre :
le chauffage d'une eau importée (400) dans un troisième échangeur de chaleur (316) par transfert thermique indirect avec le reformat (25), dans lequel la pluralité d'échangeurs de chaleur comprend le troisième échangeur de chaleur (316), et dans lequel le reformat chauffe l'alimentation (376) pour le deuxième échangeur de chaleur (320) dans le deuxième échangeur de chaleur (320) avant que le reformat (25) chauffe l'eau importée (400) dans le troisième échangeur de chaleur (316) ; et de préférence le passage de l'eau importée (400) depuis le troisième échangeur de chaleur (316) vers le dégazeur (711) de la revendication 4.

8. Procédé selon la revendication 7 comprenant en outre :
le chauffage d'une charge d'alimentation d'hydrocarbure (75) dans un quatrième échangeur de chaleur (311) par transfert thermique indirect avec le reformat (25), dans lequel la pluralité d'échangeurs de chaleur comprend le quatrième échangeur de chaleur (311), et dans lequel le reformat (25) chauffe la charge d'alimentation d'hydrocarbure (75) dans le quatrième échangeur de chaleur (311) avant que le reformat (25) chauffe l'alimentation (376) pour le deuxième échangeur de chaleur (320) dans le deuxième échangeur de chaleur (320).

9. Procédé selon la revendication 8 comprenant en outre :

le chauffage d'une alimentation de ballon de vapeur d'eau (220) comprenant une partie d'un effluent aqueux dégazé (245) provenant du dégazeur (711) dans un cinquième échangeur de chaleur (314) par transfert thermique indirect avec le reformat (25), dans lequel la pluralité d'échangeurs de chaleur comprend le cinquième échangeur de chaleur (314), et dans lequel le reformat chauffe l'alimentation de ballon de vapeur d'eau (220) dans le cinquième échangeur de chaleur (314) après que le reformat chauffe la charge d'alimentation d'hydrocarbure (75) dans le quatrième échangeur de chaleur (311) et avant que le reformat chauffe l'alimentation (376) pour le deuxième échangeur de chaleur (320) dans le deuxième échangeur de chaleur (320) ; et
le passage de l'alimentation de ballon de vapeur d'eau (220) chauffée vers un ballon de vapeur d'eau (712) ;
et comprenant en outre facultativement :
le chauffage de l'alimentation de ballon de vapeur d'eau (220) dans un sixième échangeur de chaleur (315) par transfert thermique indirect avec le reformat (25), dans lequel le reformat chauffe l'alimentation de ballon de vapeur d'eau (220) dans le sixième échangeur de chaleur (315) avant que le reformat soit passé dans le réacteur de conversion (303), et dans lequel l'alimentation de ballon de vapeur d'eau (220) est chauffée dans le cinquième échangeur de chaleur (314) avant que l'alimentation de ballon de vapeur d'eau (220) soit chauffée dans le sixième échangeur de chaleur (315).

10. Appareil de production d'un produit gazeux contenant de l'hydrogène (30) tout en ralentissant la corrosion de la tuyauterie (357) reliant de manière fonctionnelle un séparateur (321) et une unité d'adsorption modulée en pression (501), l'appareil comprenant :

un réacteur de conversion (303) ayant une entrée pour recevoir un reformat (25) et une sortie pour évacuer le reformat (25) après avoir réagi dans le réacteur de conversion (303) ;
le séparateur (321) ayant une entrée disposée de manière fonctionnelle pour recevoir le reformat provenant du réacteur de conversion, une sortie pour évacuer un reformat appauvri en eau (29), et une sortie pour évacuer un condensat aqueux (240) ;
une pluralité d'échangeurs de chaleur disposée de manière fonctionnelle entre le réacteur de conversion (303) et le séparateur (321) ;
l'unité d'adsorption modulée en pression (501) ayant une entrée disposée de manière fonctionnelle pour recevoir le reformat appauvri en eau (29) provenant du séparateur (321), une sortie pour évacuer le produit gazeux contenant de l'hydrogène (30), et une sortie pour évacuer un sous-produit gazeux (82) ; et
un premier échangeur de chaleur (322) disposé de manière fonctionnelle entre le séparateur (321) et l'unité d'adsorption modulée en pression (501) pour chauffer le reformat appauvri en eau (29) par transfert thermique indirect avec une alimentation (347) pour le premier échangeur de chaleur (322).

11. Appareil selon la revendication 10 dans lequel au moins une partie de la tuyauterie (357) reliant de manière fonctionnelle le séparateur (321) et l'unité d'adsorption modulée en pression (501) est isolée thermiquement.

12. Appareil selon la revendication 10 ou la revendication 11 comprenant en outre :

un deuxième échangeur de chaleur (318, 320) ayant une première entrée disposée de manière fonctionnelle pour recevoir le reformat (25) provenant de la sortie du réacteur de conversion (303) et une première sortie pour évacuer le reformat (25) à partir du deuxième échangeur de chaleur (318, 320), une seconde entrée disposée de manière fonctionnelle pour recevoir une alimentation (376) pour le deuxième échangeur de chaleur (318, 320) et une seconde sortie pour évacuer un effluent (377) à partir du deuxième échangeur de chaleur (318, 320), dans lequel le premier échangeur de chaleur (322) est disposé de manière fonctionnelle pour recevoir une partie de l'effluent (377) provenant du deuxième échangeur de chaleur en tant qu'alimentation (347) pour le premier échangeur de chaleur (322), et dans lequel la pluralité d'échangeurs de chaleur comprend le deuxième échangeur de chaleur (318, 320),
le deuxième échangeur de chaleur (318) étant facultativement une chaudière basse pression.

13. Appareil selon la revendication 12 comprenant en outre :

un troisième échangeur de chaleur (316) pour chauffer une eau importée (400) par transfert thermique indirect avec le reformat (25), le troisième échangeur de chaleur (316) ayant une première entrée disposée de manière fonctionnelle pour recevoir le reformat (25) provenant de la première sortie du deuxième échangeur de chaleur (318, 320) et une première sortie pour évacuer le reformat (25) à partir du troisième échangeur de chaleur (316), une seconde entrée disposée de manière fonctionnelle pour recevoir l'eau importée (400) et une seconde sortie pour évacuer l'eau importée (400), dans lequel la pluralité d'échangeurs de chaleur comprend le troisième échangeur de chaleur ;
un quatrième échangeur de chaleur (311) pour chauffer une charge d'alimentation d'hydrocarbure (75) par transfert thermique indirect avec le reformat (25), le quatrième échangeur de chaleur (311) ayant une première entrée disposée de manière fonctionnelle pour recevoir le reformat (25) provenant de la sortie du réacteur de conversion (303) et une première sortie pour évacuer le reformat (25) à partir du quatrième échangeur de chaleur (311), une seconde entrée disposée de manière optionnelle pour recevoir la charge d'alimentation d'hydrocarbure (75) et une seconde sortie pour évacuer la charge d'alimentation d'hydrocarbure (75), dans lequel la pluralité d'échangeurs de chaleur comprend le quatrième échangeur de chaleur ;
un cinquième échangeur de chaleur (314) pour chauffer une alimentation de ballon de vapeur d'eau (220) par transfert thermique indirect avec le reformat (25), le cinquième échangeur de chaleur (314) ayant une première entrée disposée de manière fonctionnelle pour recevoir le reformat (25) provenant de la première sortie du quatrième échangeur de chaleur (311) et une première sortie pour évacuer le reformat (25) à partir du cinquième échangeur de chaleur, une seconde entrée disposée de manière fonctionnelle pour recevoir l'alimentation de ballon de vapeur d'eau (220) et une seconde sortie pour évacuer l'alimentation de ballon de vapeur d'eau (220), dans lequel la pluralité d'échangeurs de chaleur comprend le cinquième échangeur de chaleur (314) ; et

un sixième échangeur de chaleur (312) pour chauffer la charge d'alimentation d'hydrocarbure (75) par transfert thermique indirect avec le reformat (25), le sixième échangeur de chaleur (312) ayant une première entrée disposée de manière fonctionnelle pour recevoir le reformat (25) provenant de la première sortie du cinquième échangeur de chaleur (314) et une première sortie pour évacuer le reformat (25) à partir du sixième échangeur de chaleur (312), une seconde entrée disposée de manière fonctionnelle pour recevoir la charge d'alimentation d'hydrocarbure (75) et une seconde sortie pour évacuer la charge d'alimentation d'hydrocarbure (75), dans lequel la seconde entrée du quatrième échangeur de chaleur (311) est disposée de manière fonctionnelle pour recevoir la charge d'alimentation d'hydrocarbure (75) provenant de la seconde sortie du sixième échangeur de chaleur (312), et dans lequel la pluralité d'échangeurs de chaleur comprend le sixième échangeur de chaleur (312).

14. Appareil selon la revendication 12 ou la revendication 13 comprenant en outre :

un échangeur de chaleur (214) pour chauffer de l'air de combustion (99) par transfert thermique indirect avec de l'eau d'alimentation de chaudière pour l'échangeur de chaleur (214) pour chauffer l'air de combustion (99), l'échangeur de chaleur pour chauffer l'air de combustion ayant une première entrée disposée de manière fonctionnelle pour recevoir l'eau d'alimentation de chaudière et une première sortie pour évacuer un effluent aqueux (215) à partir de l'échangeur de chaleur (214) pour chauffer l'air de combustion (99), une seconde entrée disposée de manière fonctionnelle pour recevoir l'air de combustion (99) et une seconde sortie pour évacuer l'air de combustion (99), dans lequel la seconde entrée du deuxième échangeur de chaleur (320) est disposée de manière fonctionnelle pour recevoir l'effluent aqueux (215) provenant de l'échangeur de chaleur (214) pour chauffer l'air de combustion (99) ; et/ou

un échangeur de chaleur (515) pour chauffer le sous-produit gazeux (82) par transfert thermique indirect avec l'eau d'alimentation de chaudière pour l'échangeur de chaleur (515) pour chauffer le sous-produit gazeux (82), l'échangeur de chaleur pour chauffer le sous-produit gazeux (82) ayant une première entrée disposée de manière fonctionnelle pour recevoir l'eau d'alimentation de chaudière et une première sortie pour évacuer un effluent aqueux (516) à partir de l'échangeur de chaleur (515) pour chauffer le sous-produit gazeux (82), une seconde entrée disposée de manière fonctionnelle pour recevoir le sous-produit gazeux (82) provenant de l'unité d'adsorption modulée en pression (501) et une seconde sortie pour évacuer le sous-produit gazeux (82), dans lequel la seconde entrée du deuxième échangeur de chaleur (320) est disposée de manière fonctionnelle pour recevoir l'effluent aqueux (516) provenant de l'échangeur de chaleur (515) pour chauffer le sous-produit gazeux (82) ;

et/ou dans lequel le deuxième échangeur de chaleur (320) est disposé de manière fonctionnelle pour recevoir au moins une partie (241) du condensat aqueux (240) provenant du séparateur (321).

FIG. 1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2103569 A2
- US 20140373713 A
- US 8187363 B
- WO 2007020514 A2
- US 7377951 B
- US 7850944 B

**Non-patent literature cited in the description**

- Report on Emission Limits for Rule 1189 - Emissions from Hydrogen Plant Process Vents. *South Coast Air Quality Management District,* 07 June 2001, http//www3.aqmd.gov/hb/attachments/2002/020620b.doc
- Final Environmental Assessment: Proposed Rule 1189 - Emissions from Hydrogen Plant Process Vents. *SCAQMD No. 1189JDN021199, South Coast Air Quality Management District,* 17 December 1999, http://www.aqmd.gov/docs/default-source/ceqa/documents/aqmd-projects/2000/final-ea-for-proposed-amended-rule-1189.doc?sfvrsn=4